# NEUE EUROPÄISCHE PATENTSCHRIFT

(11) **EP 1 445 588 B2**
(45) Veröffentlichungstag und Bekanntmachung des Hinweises auf die Entscheidung über den Einspruch: **01.09.2021**
(45) Hinweis auf die Patenterteilung: 17.04.2013
(21) Anmeldenummer: 03020727.8
(22) Anmeldetag: 12.09.2003
(51) Int. Cl.: G01F 23/284, G01F 23/00

(54) **Füllstandsmessgerät und Verfahren zu dessen Einsetzen in einen Behälter**
Level measuring device and method for its insertion into a container
Appareil de mesure de niveau et méthode pour son insertion dans un récipient

(30) Priorität: 17.01.2003 DE 10301863
(43) Veröffentlichungstag der Anmeldung: 11.08.2004
(60) Teilanmeldung: 10010493.4
(73) Patentinhaber: VEGA Grieshaber KG, 77709 Wolfach (DE)
(72) Erfinder: Lenk, Fritz, 77761 Schiltach (DE)
(74) Vertreter: Patentanwälte Bauer Vorberg Kayser

(56) Entgegenhaltungen:
- EP-A- 0 875 738
- DE-A1- 3 335 335
- DE-B1- 1 648 163
- US-A- 4 465 088
- US-A- 5 955 684
- US-B1- 6 374 685

## Beschreibung

Die Erfindung bezieht sich auf eine Anordnung aus einem Radarfüllstandsmessgerät und einem Behälter mit den oberbegrifflichen Merkmalen des Patentanspruchs 1.

Zum Messen des Füllstands eines Füllmediums in einem Behälter sind Radarfüllstandsmessgeräte allgemein bekannt. Solche Radarfüllstandsmessgeräte weisen Antennenanpasssysteme mit Horn- oder Stabantennen auf, welche in den Behälter hineinragen. Zur Aufnahme eines Radarfüllstandsmessgerätes weist ein solcher Behälter Flanschstutzen, Klemm- oder Rohrverschraubungsstutzen auf, die teilweise aus dem Behälter herausragen.

Die Kombination aus Radarmessgerät und einem derartigen Flansch bzw. Stutzen am Behälter ist für den Einsatz in steriler Umgebung jedoch nicht geeignet, da Füllgutrückstände, welche in den Bereich des Stutzens am Behälter und an der Antenne bzw. an sonstige Komponenten des Radarmessgerätes gelangen, für eine Reinigung nicht ausreichend zugänglich sind. Insbesondere ist auch eine Reinigung der Antennenkomponenten im eingebauten Zustand bei einer derartigen Anordnung nicht möglich, da die Abdichtung zwischen der in den Behälter hineinragenden Antenne und dem Stutzen des Behälters nicht ausreichend glatt ausgeführt ist.

Als Stand der Technik werden die DE 100 23 692 A1 und die DE 196 28 551 A1 genannt.

Die Aufgabe der Erfindung besteht darin, eine Anordnung aus Radarfüllstandsmessgerät und Behälter derart zu verbessern, dass nach dem Zusammenbau von Radarfüllstandsmessgerät und Behälter eine bessere Reinigung möglich ist und insbesondere der Einsatz auch in sterilen Bereichen möglich ist.

Diese Aufgabe wird durch eine Anordnung aus einem Radarfüllstandsmessgerät und einem Behälter mit den Merkmalen des Patentanspruchs 1 gelöst.

Eine besonders gute Abdichtung des Übergangs zwischen dem eingebauten Radarfüllstandsmessgerät und der benachbarten Innenwandung des Behälters ergibt sich dadurch, dass in einen zwischen diesen befindlichen seitlichen Abstandsbereich ein Teil eines Dichtungselements hineingedrückt wird. Zum verformenden Hineindrücken wird das Dichtungselement beim Einsetzen des Radarfüllstandsmessgerätes von einem Mitnehmer am Radarfüllstandsmessgerät in Richtung des Behälterinnenraums gedrückt, wobei sich die Durchgangsöffnung, in welche das Radarfüllstandsmessgerät eingesetzt ist, in Richtung der Behälterinnenseite hin verjüngt, somit ein Widerlager für das Dichtungselement ausbildet. Das Radarfüllstandsmessgerät weist einen Antennenkegel sowie einen Antennenkegelansatz auf. Dazu bilden der zumindest eine Mitnehmer, eine davor befindliche Umfangswandung des Antennenkegelansatzes oder des Antennenkegels sowie eine innenseitige Wandung der Durchgangsöffnung und eines in diese hineinragenden Wandungsabschnitts der in die Durchgangsöffnung hineinragenden Öffnungswandung einen Raum zur Aufnahme der Dichtung aus. Durch eine derartige Anordnung und ein entsprechendes Zusammensetzen wird ein Teil der Dichtung in den Zwischenraum bzw. Abstandsbereich zwischen der Durchgangsöffnungsinnenseite und dem Außenumfang des Radarfüllstandsmessgerätes hineingedrückt. Dieser Dichtungsteil, der verformt in den Abstandsbereich hinein gedrückt wird, bewirkt eine Einspannung des Radarfüllstandsmessgerätes innerhalb der Durchgangsöffnung in seitlicher Richtung, d. h. in Richtung einer Ebene im Wesentlichen senkrecht zur Einbaurichtung des Radarfüllstandsmessgerätes, welche durch die Behälterinnenseite im Einbaubereich aufgespannt wird. Außerdem bewirkt die Dichtung eine Abdichtung, welche ein Eindringen von Anteilen des Füllmediums in den Abstandsbereich verhindert. Es entsteht eine im Wesentlichen glatt verlaufende bzw. diskontinuitätenfreie Oberfläche von der Behälterinnenseite über die in den Abstandsbereich hineingedrückten Dichtungsanteile zu der innenseitigen Oberfläche des Radarfüllstandsmessgerätes, welche beispielsweise als ein Antennenkegel eines Radarfüllstandsmessgerätes ausgebildet ist. Neben dem Verhindern des Eindringens von Füllmedium in Spalten, Ritzen oder dergleichen oder gar den inneren Bereich des Füllstutzens und das Radarfüllstandsmessgerät selber wird somit auch eine Reinigung bei einer derartigen Anordnung erleichtert. Außerdem ist hervorzuheben, dass durch diese Anordnung eine besonders stabile Verspannung des Radarfüllstandsmessgerätes innerhalb der Durchgangsöffnung des Behälters ermöglicht wird.

Insbesondere ermöglicht eine derartige Anordnung und Einbauweise die Verwendung handelsüblicher Dichtungselemente, insbesondere Dichtungen in Form eines O-Rings, soweit diese den entsprechenden Hygienebestimmungen und den Bestimmungen bezüglich chemischer Beständigkeiten mit Blick auf die geplanten Füllmedien genügen. Die Verwendung speziell geformter Dichtungen ist vorteilhafterweise nicht mehr erforderlich.

Vorteilhafte Ausgestaltungen sind Gegenstand abhängiger Ansprüche.

Vorteilhafterweise wird die Dichtung derart in den Abstandsbereich hineingedrückt, dass sie nicht nur in den Abstandsbereich hineinragt, sondern durch diesen hindurch teilweise in den Innenraum des Behälters hervorquillt. Dies bedingt zwar einen nur beschränkt ganz glatten Übergang zwischen der Behälterinnenseite und der behälterinnenseitigen Oberfläche des Radarfüllstandsmessgerätes, verhindert aber besonders sicher ein Eindringen von Teilen des Füllmediums in einen ansonsten möglicherweise verbleibenden Spalt im Abstandsbereich. Außerdem wird sichergestellt, dass im gesamten Abstandsbereich, also in einem möglichst großen Volumenbereich, ein Teil des Dichtungselements zwischen der innenseitigen Behälterwandung bzw. Durchgangsöffnungswandung und der Außenwandung des Radarfüllstandsmessgerätes zur verbesserten Stabilisierung dient.

Von dem Grundprinzip der Verformung der Durchgangsöffnung derart, dass sich diese zur Behälterinnenseite hin verjüngt, um ein Widerlager für einen Teil der Dichtung auszubilden, ausgehend, sind insbesondere auch gegenüber einer senkrechten bzw. parallel zur allgemeinen Hauptdurchgangsöffnungswandung verlaufenden Behälteraussenwandung in den Wandungen des Übergangsbereichs ausgeprägte Ausformungen vorteilhaft. Ein derartiger nicht geradliniger Verlauf kann ganz oder teilweise den Durchmesser des Radarfüllstandsmessgerätes in diesem Bereich verjüngend ausgebildet sein. Besonders vorteilhaft ist jedoch eine derartige Ausnehmung, welche den Durchmesser des Radarfüllstandsmessgerätes in diesem Bereich zunehmen lässt, um ebenfalls eine Widerlagerfunktion für das dann zwischen einem Mitnehmer zum Einpressen der Dichtung und dieser hinsichtlich des Durchmessers zunehmenden Wandung zu ermöglichen. Beim Einführen des Radarfüllstandsmessgerätes in die Durchgangsöffnung kann so ein Dichtungselement bereits vorteilhaft vor dem Einsetzen aufgesetzt und dann zusammen mit dem Radarfüllstandsmessgerät eingeführt werden. Außerdem wird der verformende Druck auf das Dichtungelement zum Eindrücken bzw. Einpressen in den Abstandsbereich beim Verspannen weiter erhöht. Besonders vorteilhaft sind derartige Ausnehmungen, welche muldenförmig oder zumindest teilweise bogenförmig verlaufen, also insbesondere der typischen Form eines O-Rings als Standarddichtungselement angepasst sind.

Am Behälter wird die Durchgangsöffnung vorteilhafterweise in Form eines typischen Flansches ausgebildet, der teilweise aussenseitig aus dem Behälter herausragt. Dies ermöglicht eine stabile Einspannung und Befestigung des Radarfüllstandsmessgerätes über den Flansch am Behälter. Zweckmäßigerweise wird zum Ausbilden einer möglichst glatten Oberfläche innerhalb des Füllraums des Behälters ein Einschweissflansch in den Behälter eingesetzt, welcher in eine entsprechende Öffnung der Behälterwandung eingeschweißt wird. Wie alle sonstigen Schweißnähte im Behälterinneren wird die innenseitige Schweißnaht zweckmäßigerweise geglättet und poliert.

Ein Ausführungsbeispiel und Varianten dazu werden nachfolgend anhand der Zeichnung näher erläutert. Es zeigen:
- Fig. 1: einen Schnitt durch ein Radarfüllstandsmessgerät, welches in einen Behälter eingebaut ist;
- Fig. 2: eine Variante einer solchen Anordnung aus Radarfüllstandsmessgerät und Behälter und
- Fig. 3A - 3C: Ausschnitte aus dem Übergangsbereich zwischen Radarfüllstandsmessgerät und Behälterwandung zur Veranschaulichung verschiedenartiger Ausformungen des Übergangsbereichs im Bereich der Behälterinnenseite.

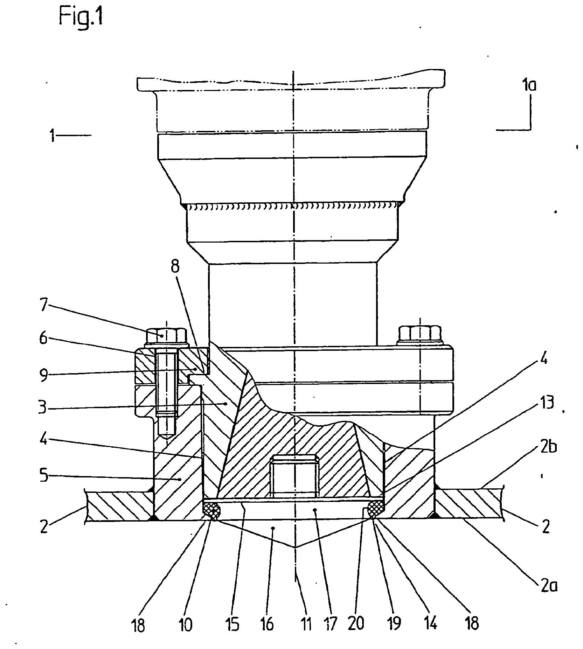

Wie dies aus der Schnittdarstellung von Fig. 1 ersichtlich ist, besteht eine Anordnung aus einem Radarfüllstandsmessgerät 1 und einem Behälter 2, in dessen Behälterwandung das Radarfüllstandsmessgerät 1 eingesetzt ist, aus einer Vielzahl von Komponenten, von denen nachfolgend jedoch nur die zum Verständnis wesentlichen Bauelemente beschrieben werden. Für den Fachmann werden verschiedenartige Alternativen erkenntlich sein, von denen nachfolgend beispielhaft nur einzelne aufgeführt werden.

Das Radarfüllstandsmessgerät 1 ist bei der dargestellten Ausführungsform ein RadarRadarfüllstandsmessgerät und weist entsprechend im rück- bzw. außenseitigen Abschnitt eine Radarelektronik 1a auf. Von der Radarelektronik 1a ausgehend, erstreckt sich ein Messgerätstutzen 3 mit weiteren Messgerätekomponenten in üblicher Art und Weise in Richtung des Behälterinnenraums des Behälters 2. Der vordere Abschnitt des Messgerätstutzens 3 ragt dabei in eine Durchgangsöffnung 4 hinein, welche in der Wandung des Behälters 2 ausgebildet ist.

Um eine stabile Aufnahme des Messgeräts 1, insbesondere Radarfüllstandsmessgerätes, in der Durchgangsöffnung 4 zu ermöglichen, ist in der Behälterwandung des Behälters 2 ein Flansch 5 ausgebildet. Der Flansch ragt aus dem Behälter vorzugsweise nach außen hin hinaus, um so die Durchgangsöffnung 4 mit einer größeren Führungs- und Anlagefläche auszubilden.

Außerdem dient der Flansch 5 zur Befestigung des Radarfüllstandsmessgerätes 1 an dem Behälter 2. Bei der dargestellten Ausführungsform weist der Flansch 5 in seinem Außenumfangsbereich eine Gewindebohrung 6 auf, in welche eine Einspannschraube 7 zum Verspannen des Radarfüllstandsmessgerätes 1 eingeschraubt werden kann. Das Radarfüllstandsmessgerät 1 weist in seinem Außenumfang beispielsweise einen oder mehrere Messgerät-Einspannmitnehmer 8 auf, welche von einer Spannschelle 9 übergriffen werden, wobei die Spannschelle 9 mit Hilfe der Einspannschraube 7 an dem Flansch 5 befestigt wird. Je nach Stärke einer Dichtung 10 und/oder Länge des Messgerätstutzens 3 relativ zu der Position des Messgerät-Einspannmitnehmers 8 an der Umfangswandung kann der Messgerät-Einspannmitnehmer 8 zugleich als Anschlag für eine gewünschte Endposition dienen, wie dies durch den am Flansch 5 anliegenden Messgerät-Einspannmitnehmer 8 beispielhaft dargestellt ist.

Bei der dargestellten Ausführungsform ist der Flansch 5 in der Wandung des Behälters 2 eingeschweißt. Dies ermöglicht eine besonders glatte Oberfläche im Bereich der Behälterinnenseite 2a, da nach dem Verschweißen des Flansches 5 an der Wandung des Behälters 2 eine Glättung und Polierung vorgenommen werden kann.

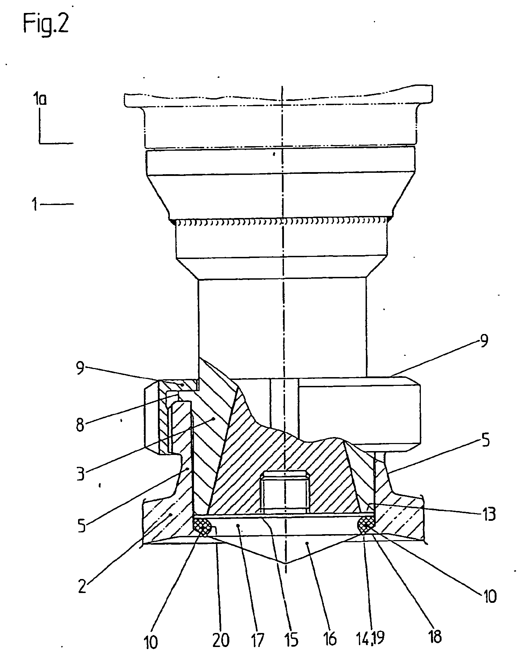

Jedoch sind auch andere Ausführungsformen möglich, wie dies beispielsweise in Fig. 2 dargestellt ist. Dabei weist der Messgerätstutzen 3 einen Messgerät-Einspannmitnehmer 8 auf, welcher von einer Spannschelle 9 gegen den Flansch 5 gespannt wird, wobei der Flansch 5 ein Außengewinde und ein Teil der Spannschelle 9 ein beim Zusammenbau in dieses Außengewinde eingreifendes Innengewinde aufweisen. Bei der in Fig. 2 dargestellten Ausführungsform ist der Flansch 5 zugleich als integraler Bestandteil der Behälterwandung ausgebildet.

Die Innenseite der Durchgangsöffnung 4 und die Außenseite des Radarfüllstandsmessgerätes 1 weisen in dem Übergangsbereich bzw. Nachbarbereich zur Behälterinnenseite 2a des Behälters 2 eine spezielle Ausformung zur Aufnahme eines oder mehrerer Dichtungselemente auf. Dies dient dazu, eine besonders stabile Halterung des Radarfüllstandsmessgerätes 1 in der Durchgangsöffnung 4 zu ermöglichen, wobei zugleich eine glatte Oberfläche der Behälterinnenseite auch im Übergangsbereich zu der Stirnseite des Radarfüllstandsmessgerätes 1 ermöglicht wird. Insbesondere kann eine Dichtung 10 in Form eines im Wesentlichen handelsüblichen O-Rings verwendet werden.

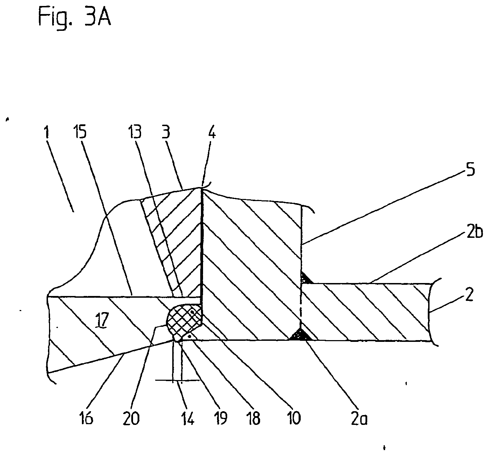

Bei der in Fig. 1 dargestellten Ausführungsform, zu der Fig. 3A eine vergrößerte Ausschnittsdarstellung, zeigt, ist die Innenwandung der Durchgangsöffnung 4 so ausgebildet, dass sie zu der Behälterinnenseite 2a hin in Richtung parallel der zentralen Achse 11 durch die Durchgangsöffnung 4 hindurch verläuft. D. h., die Durchgangsöffnung 4 verjüngt sich unter Ausbildung einer in die Durchgangsöffnung hineinragenden Öffnungswandung 18 in Richtung der Behälterinnenseite 2a. Mit anderen Worten verbreitert sich der Flansch 5 zur Behälterinnenseite 2a hin in die Durchgangsöffnung 4 hineinführend in beispielsweise Form eines kleinen Vordaches.

Die Neigung bzw. Steilheit der in die Durchgangsöffnung 4 zur Behälterinnenseite 2a hin hineinragenden Wandung 18 ist dabei so dimensioniert, dass für eine zwischen dieser Wandung 18 und einem Mitnehmer 13 des Radarfüllstandsmessgerätes 1 eingespannte Dichtung 10 ein Widerlager ausgebildet wird. Außerdem ist die Neigung so gewählt, dass die gegen diese Wandung gedrückte Dichtung 10 in Richtung eines spaltförmigen Abstandsbereichs 14 gedrückt wird, welcher zwischen der innenseitigen Wandung der Durchgangsöffnung 4 im Nachbarbereich zur Behälterinnenseite 2a und dem dortigen Außenumfang des Radarfüllstandsmessgerätes 1 ausgebildet ist.

Das Radarfüllstandsmessgerät 1 weist in seinem vorderseitigen Abschnitt in dem Übergangsbereich zur Behälterinnenseite 2a hin einen Umfang auf, welcher derart schmaler ausgebildet ist, als die dortige Breite der Durchgangsöffnung 4. Dadurch wird ein Abstandsbereich 14 ausgebildet.

In einem Abstand von der Behälterinnenseite 2a aus weist das Radarfüllstandsmessgerät 1 den einen oder mehrere Mitnehmer 13 für die Dichtung 10 auf. Der Mitnehmer 13 kann dabei z.B. als integralen Bestandteil des z.B. aus Teflon hergestellten Antennenkegels 16, als eigentliche Stirnseite des Messgerätstutzens 3, als Trenn- oder Übergangselement 15 zu einem Antennenkegel 16 oder als Antennenkegelansatz 17 ausgebildet sein. Der bzw. die Mitnehmer 13, die davor befindliche Umfangswandung des Radarfüllstandsmessgerätes 1, des Messgerätstutzens, des Kegelansatzes 17 bzw. des Antennenkegels sowie die innenseitige Wandung der Durchgangsöffnung 4 und des in diese hineinragenden Wandungsabschnitts der in die Durchgangsöffnung hineinragenden Öffnungswandung 18 bilden einen Raum zur Aufnahme der Dichtung 10 aus.

Beim Einsetzen des Radarfüllstandsmessgerätes 1 in die Durchgangsöffnung 4 wird die in diesem Bereich befindliche Dichtung 10 eingespannt und von dem Dichtungs-Mitnehmer 13 in Richtung der Behälterinnenseite 2a und der in die Durchgangsöffnung 4 hineinragenden Öffnungswandung 18 gedrückt bzw. gepresst. Insbesondere auch durch die Neigung der in die Durchgangsöffnung 4 hineinragenden Öffnungswandung 18 des Flansches 5 bzw. der Behälterwandung des Behälters 2 wird die Dichtung 10 in den Abstandsbereich zwischen der in die Durchgangsöffnung 4 hineinragenden Öffnungswandung 18 und dem Außenumfang des Radarfüllstandsmessgerätes, vorliegend des Antennenkegelansatzes 17, hineingedrückt. In bevorzugter Ausführungsform wird die Dichtung 10 dabei nicht nur in den Abstandsbereich 14 hineingedrückt, sondern bis zu der Behälterinnenseite 2a oder vorzugsweise leicht in den Innenraum des Behälters 2 hineinquellend (19) gedrückt.

Fig. 1 und Fig. 3A zeigen dabei eine besonders bevorzugte Ausführungsform des Übergangsbereichs zur Behälterinnenseite 2a hin. Dabei ragt die in die Durchgangsöffnung 4 hineinragende Öffnungswandung 18 schräg in Richtung des Abstandsbereiches 14, so dass die hineinragende Öffnungswandung 18 als Widerlager und gleichzeitig Führungselement für die angedrückte Dichtung 10 dient.

Der Außenumfang des Radarfüllstandsmessgerätes in diesem Bereich, vorliegend des Antennenkegelansatzes 17, weist eine Ausnehmung 20 auf. Die dargestellte Ausnehmung 20 ist in bevorzugter Ausführungsform konkav gerundet ausgebildet, beispielsweise einem Radius größer als einem Radius zum Einsetzen eines typischen O-Rings als Dichtung 10. Durch die Form der Ausnehmung 20 wird ein Dichtungsring einerseits durch den behälterinnenseitig abgewandten Abschnitt der Ausnehmung 20 in Richtung der hineinragenden Öffnungswandung 18 des Flansches 5 gedrückt und wird andererseits durch den zur Behälterinnenseite 2a hinlaufenden Abschnitt der Ausnehmung 20 schräg seitlich in Richtung des Abstandsbereichs 14 geführt und gedrückt.

Wie dies aus der vergrößerten Darstellung von Fig. 3A ersichtlich ist, werden in dem Übergangsbereich scharfe Kanten vorzugsweise vermieden, da durch einen abgerundeten Verlauf der einzelnen Wandungen und Übergangsbereiche scharfe Kantenverläufe vermieden werden, welche die Dichtung 10 möglicherweise beschädigen könnten. Derartige Beschädigungen, die üblicherweise unkritisch wären, würden zu einer rauen Oberfläche des zum Innenraum des Behälters 2 hin offenen Abschnitts der Dichtung 10 führen und Ansatzpunkte zum Festhaften von Teilen des Füllmediums ausbilden.

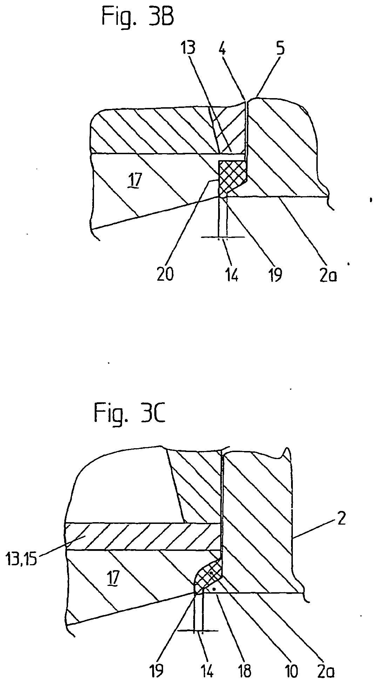

Weitere Varianten zur Ausformung des Übergangsbereichs sind aus den Fig. 3B bis 3C ersichtlich. Bei der Variante aus Fig. 3B verläuft die Umfangswandung des Antennenkegelansatzes 17 bis zu dem Mitnehmer 13 glattwandig und geradlinig. Bei dieser Ausführungsform wird die Dichtung 10 trotzdem durch Druck des Mitnehmers 13 und die entsprechende Führung der in die Durchgangsöffnung 4 hineinragenden Öffnungswandung 18 in den Abstandsbereich 14 hineingedrückt. Auch bei dieser, wie auch bei den weiteren Ausführungsformen bewirkt der verformt in den Abstandsbereich 14 hineingedrückte Teil der Dichtung 10 eine zur Behälterinnenseite 2a hin glatte, insbesondere spaltfreie, durchgehende Oberfläche zur Stirnseite des Radarfüllstandsmessgerätes 1, vorliegend also zu dem Antennenkegel 16. Außerdem bewirkt der in den Abstandsbereich 14 hineingedrückte Teil der Dichtung 10 eine seitliche Stabilisierung, welche den Antennenkegelansatz 17 und damit das Radarfüllstandsmessgerät 1 im vorderseitigen Abschnitt in einer Ebene der Behälterinnenseite 2a axial und seitlich/radial stabil einspannt und in der Öffnung zentriert.

Bei der in Fig. 3B dargestellten Ausführungsform ist die in die Durchgangsöffnung 4 hineinragende Öffnungswandung 18 außerdem mit einem kontinuierlich gerundeten Verlauf ausgebildet.

Wie dies aus Fig. 3C ersichtlich ist, sind aber auch Ausführungsformen umsetzbar, bei denen die Umfangswandung des Antennenkegelansatzes 17 ebenfalls sich verjüngend verlaufend ausgebildet ist. Neben diesen dargestellten Ausführungsformen sind auch beliebige andere Ausführungsformen, insbesondere auch wellenförmig verlaufende Wandungen und dergleichen, umsetzbar.

Die Ausnehmung 20 im vorderseitigen umfangsseitigen Abschnitt des Radarfüllstandsmessgerätes 1 bzw. vorliegend im Antennenkegelansatz 17 kann direkt bei der Fertigung des entsprechenden Bauelements oder aber auch zu einem späteren Zeitpunkt als Ausfräsung, Ausdrehung und dergleichen ausgebildet werden. Die gesamte Anordnung wird vorzugsweise so dimensioniert, dass bei Verwendung einer genormten Dichtung 10 und Festziehen des Radarfüllstandsmessgerätes 1 an dem Flansch 5 ein Druck derart auf die Dichtung 10 ausgeübt wird, dass diese definiert in den Ringspalt bzw. Abstandsbereich 14 zwischen Flansch 5 und Antennenkegel 16, 17 gedrückt wird, dabei radial und axial abdichtet und vorzugsweise den Antennenkegel 16, 17 in seiner Position fixiert. Das definierte Verformen der Dichtung 10 in dem Abstandsbereich 14 sorgt somit für einen spaltfreien Übergang zwischen einerseits dem Flansch 5 des Behälters 2 und andererseits dem Antennenkegel 16 des Radarfüllstandsmessgeräts 1, welcher für den Einsatz in einer sterilen Umgebung notwendig bzw. erwünscht ist.

Der Antennenkegel 16, 17 besteht bei einem RadarRadarfüllstandsmessgerät als Radarfüllstandsmessgerät 1 zweckmäßigerweise aus einem dielektrischen Werkstoff, z. B. Keramik oder Kunststoff, und ermöglicht durch eine sehr flache Kegelform eine sehr gute Reinigung, welche beispielsweise mit einem Sprühkopf automatisch durchführbar ist.

Möglich ist auch der Einsatz nicht genormter Dichtungen 10, wobei dann beispielsweise durch die angesetzte Spannkraft für verschiedene Dichtungstypen jeweils eine Vorgabe gegeben werden kann, um stets ohne aufwendiges Überprüfen des Hervorquellens der Dichtung in dem Innenraum des Behälters 2 überprüfen zu müssen, ob der Einspanndruck und die Einspanntiefe ausreichend gewählt sind.

Die vorstehend genannten einzelnen Elemente, welche von der Behälteraussenseite (2b) zur Behälterinnenseite (2a) in dem Übergangsbereich mit der Dichtung (10) angeordnet sind, verlaufen vorzugsweise kreisförmig, so dass ein mit kreisförmigem querschnittausgebildetes Radarfüllstandsmessgerät unter Verwendung eines O-Rings als Dichtung 10 in den Stutzen bzw. Flansch (5) eingesetzt werden kann. Insbesondere die Mitnehmer 13 aber auch andere Führungselemente müssen jedoch nicht zwingend durchgehend kreisförmig verlaufen, sondern können auch als einzelne voneinander abgesetzte Elemente ausgebildet sein, so dass Mitnehmer und dergleichen zumindest aus einem Bauteil möglicherweise aber auch aus mehreren Bauteilen bestehen können.

## Patentansprüche

1. Anordnung aus einem Radarfüllstandsmessgerät und einem Behälter, wobei das Radarfüllstandmessgerät zum Einsetzen in den Behälter (2), dessen Füllstand mit einem Füllmedium zu messen ist, geeignet ist, und wobei der Behälter (2) zur Aufnahme des Radarfüllstandsmessgerätes (1) einen Flansch mit einer von einer Behälteraußenseite (2b) zur Behälterinnenseite (2a) führende Durchgangsöffnung (4) aufweist, wobei
- die Durchgangsöffnung (4) des Behälters (2) zur Behälterinnenseite (2a) hin durch eine in die Durchgangsöffnung (4) hineinragende Öffnungswandung (18) eine Verjüngung aufweist, **dadurch gekennzeichnet , dass**
- das Radarfüllstandsmessgerät (1) im Übergangsbereich der Durchgangsöffnung (4) zur Behälterinnenseite (2a) hin zum Ausbilden eines Abstandsbereichs (14) schmaler als die Durchgangsöffnung (4) ausgebildet ist,
- das Radarfüllstandsmessgerät (1) umfangseitig zumindest teilweise einen Mitnehmer (13) aufweist, der so ausgebildet ist, dass er eine Dichtung (10) abdichtend und diese verformend in Richtung der Behälterinnenseite (2a) gegen die in die Durchgangsöffnung (4) hineinragende Öffnungswandung (18) und in den Abstandsbereich (14) hineindrücken kann,
- das Radarfüllstandsmessgerät (1) einen Antennenkegel (16) sowie einen Antennenkegelansatz (17) aufweist, und
- der zumindest eine Mitnehmer (13), eine davor befindliche Umfangswandung des Antennenkegelansatzes (17) oder des Antennenkegels (16) sowie eine innenseitige Wandung der Durchgangsöffnung (4) und eines in diese hineinragenden Wandungsabschnitts der in die Durchgangsöffnung (4) hineinragenden Öffnungswandung (18) einen Raum zur Aufnahme der Dichtung (10) ausbilden.

2. Anordnung nach Anspruch 1, bei der
der Umfangsbereich des Radarfüllstandsmessgerätes (1) im eingebauten Zustand im Übergangsbereich der Durchgangsöffnung (4) zur Behälterinnenseite (2a) hin zum Führen der Dichtung (10) nicht parallel zur Längsachse (11) der Durchgangsöffnung (4) verläuft.

3. Anordnung nach Anspruch 1 oder 2, bei der
der Umfangsbereich des Radarfüllstandsmessgerätes (1) im eingebauten Zustand im Übergangsbereich der Durchgangsöffnung (4) zur Behälterinnenseite (2a) hin zum Führen der Dichtung (10) zum Abstandsbereich (14) hin zunimmt.

4. Anordnung nach einem der Ansprüche 1 bis 3, bei der
der Umfangsbereich des Radarfüllstandsmessgerätes (1) im eingebauten Zustand zur Außenseite des Übergangsbereichs zur Behälterinnenseite (2a) hin zum Führen der Dichtung (10) als Ausnehmung (20) ausgebildet ist und muldenförmig verläuft.

5. Anordnung nach einem der Ansprüche 1 bis 4, bei dem
der Umfangsbereich des Radarfüllstandsmessgerätes (1) im eingebauten Zustand zur Außenseite des Übergangsbereichs zur Behälterinnenseite (2a) und dem Abstandsbereich (14) hin zum Führen der Dichtung (10) zumindest teilweise bogenförmig verläuft.

## Claims

1. An assembly comprised of a radar filling level measuring device and a container, wherein the radar filling level measuring device is suitable for being inserted into the container (2) whose filling level with a filling medium is to be measured, and wherein the container (2), for accommodating the radar filling level measuring device (1), has a flange with a passage opening (4) leading from an outer face (2b) of the container to the inner face (2a) of the container, wherein
- the passage opening (4) of the container (2) has a taper towards the inner face (2a) of the container due to an opening wall (18) protruding into the passage opening (4),
**characterized in that**
- the radar filling level measuring device (1) is configured to be narrower than the passage opening (4) in the transitional region of the passage opening (4) towards the inner face (2a) of the container in order to form a clearance area (14),
- the radar filling level measuring device (1) has at least partially on its circumference a dog (13) configured in such a manner that it is capable of pushing a seal (10), in a sealing manner and so as to deform it, in the direction of the inner face (2a) of the container, against the opening wall (18) protruding into the opening passage (4) and into the clearance area (14),
- the radar filling level measuring device (1) has an antenna cone (16) as well as an antenna cone base (17), and
- the at least one dog (13), a circumferential wall of the antenna cone base (17) or of the antenna cone (16) located in front thereof, and an inner wall of the passage opening (4) and a wall portion, which protrudes thereinto, of the opening wall (18) protruding into the passage opening (4) form a space for accommodating the seal (10).

2. The assembly according to claim 1, wherein
the circumferential region of the radar filling level measuring device (1) in the installed state, in the transitional region of the passage opening (4) towards the inner face (2a) of the container, extends in a non-parallel manner to the longitudinal axis (11) of the passage opening (4) in order to guide the seal (10).

3. The assembly according to claim 1 or 2, wherein
the circumferential region of the radar filling level measuring device (1) in the installed state, in the transitional region of the passage opening (4) towards the inner face (2a) of the container, increases towards the clearance area (14) in order to guide the seal (10).

4. The assembly according to any one of the claims 1 to 3, wherein
the circumferential region of the radar filling level measuring device (1) in the installed state, towards the outer side of the transitional region towards the inner face (2a) of the container, is configured as a recess (20) and extends in a trough-shaped manner in order to guide the seal (10).

5. The assembly according to any one of the claims 1 to 4, wherein
the circumferential region of the radar filling level measuring device (1) in the installed state, towards the outer side of the transitional region towards the inner face (2a) of the container and the clearance region (14), extends at least partially in the shape of an arc in order to guide the seal (10).

## Revendications

1. Ensemble constitué d'un appareil de mesure de niveau de remplissage par radar et d'un récipient, dans lequel ledit appareil de mesure de niveau de remplissage par radar est apte à être inséré dans le récipient (2) dont le niveau de remplissage est à mesurer avec un milieu de remplissage, et dans lequel, pour recevoir l'appareil de mesure de niveau de remplissage par radar (1), ledit récipient (2) présente une bride ayant une ouverture de passage (4) menant d'un extérieur de récipient (2b) vers l'intérieur de récipient (2a), dans lequel
- l'ouverture de passage (4) du récipient (2) présente un rétrécissement vers l'intérieur de récipient (2a), à travers une paroi d'ouverture (18) faisant saillie dans l'ouverture de passage (4), **caractérisé par le fait que**
- dans la zone de transition de l'ouverture de passage (4), l'appareil de mesure de niveau de remplissage par radar (1) est réalisé de manière plus étroite que l'ouverture de passage (4), vers l'intérieur de récipient (2a), pour former une zone d'espacement (14),
- l'appareil de mesure de niveau de remplissage par radar (1) présente sur la circonférence, au moins en partie, un entraîneur (13) qui est conçu de manière à pouvoir pousser un joint d'étanchéité (10) de manière à ce qu'il rende étanche et à déformer celui-ci en direction de l'intérieur de récipient (2a) contre la paroi d'ouverture (18) faisant saillie dans l'ouverture de passage (4), et dans ladite zone d'espacement (14).
- l'appareil de mesure de niveau de remplissage par radar (1) comprend un cône d'antenne (16) ainsi qu'une pièce ajoutée de cône d'antenne (17), et
- ledit au moins un entraîneur (13), une paroi circonférentielle de la pièce ajoutée de cône d'antenne (17) ou du cône d'antenne (16), qui est située devant celui-ci, ainsi qu'une paroi face intérieure de l'ouverture de passage (4) et d'une portion de paroi faisant saillie dans celle-ci, de la paroi d'ouverture (18) faisant saillie dans l'ouverture de passage (4), forment un espace de réception du joint d'étanchéité (10).

2. Ensemble selon la revendication 1, dans lequel, à l'état monté, la zone circonférentielle de l'appareil de mesure de niveau de remplissage par radar (1) ne s'étend pas parallèlement à l'axe longitudinal (11) de l'ouverture de passage (4) dans la zone de transition de l'ouverture de passage (4) vers l'intérieur de récipient (2a) pour guider le joint d'étanchéité (10).

3. Ensemble selon la revendication 1 ou 2, dans lequel, à l'état monté, la zone circonférentielle de l'appareil de mesure de niveau de remplissage par radar (1) augmente vers la zone d'espacement (14) dans la zone de transition de l'ouverture de passage (4) vers l'intérieur de récipient (2a) pour guider le joint d'étanchéité (10).

4. Ensemble selon l'une quelconque des revendications 1 à 3, dans lequel, à l'état monté, la zone circonférentielle de l'appareil de mesure de niveau de remplissage par radar (1) est réalisée en tant qu'évidement (20) vers l'extérieur de la zone de transition vers l'intérieur de récipient (2a), pour guider le joint d'étanchéité (10), et s'étend en forme de creux.

5. Ensemble selon l'une quelconque des revendications 1 à 4, dans lequel, à l'état monté, la zone circonférentielle de l'appareil de mesure de niveau de remplissage par radar (1) s'étend en forme d'arc, au moins en partie, vers l'extérieur de la zone de transition vers l'intérieur de récipient (2a) et la zone d'espacement (14), pour guider le joint d'étanchéité (10).
